# EUROPEAN PATENT SPECIFICATION

(11) **EP 1 978 773 B1**
(45) Date of publication and mention of the grant of the patent: **25.01.2012**
(21) Application number: 08101377.3
(22) Date of filing: 07.02.2008
(51) Int. Cl.: H04W 4/12

(54) **Reducing signalling load**
Verminderung der Signalisierungslast
Réduction de charge de signalisation

(30) Priority: 07.02.2007 GB 0702390
(43) Date of publication of application: 08.10.2008
(73) Proprietor: Vodafone Group PLC, Newbury Berkshire RG14 2FN (GB)
(72) Inventor: Russell, Nick, Newbury, Berkshire RG14 2FN (GB); Wild, Peter, 40547, Düsseldorf (DE)
(74) Representative: Keston, David Arthur

(56) References cited:
- GB-A- 2 380 097
- US-A1- 2004 198 322
- US-A1- 2005 108 417
- "3rd Generation Partnership Project; Technical Specification Group Core Network and Terminals; Study into routeing of MT-SMs via the HPLMN (Release 7)", 3GPP STANDARD; 3GPP TR 23.840, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V7.0.1, 1 January 2007 (2007-01-01), pages 1-22, XP050363955,

## Description

The present invention relates to reducing signalling load in a communications network and, in particular, to reducing Short Message Service (SMS) related signalling load on mobile networks.

SMS is a service for transmitting simple short messages that contain text or other data between devices, that may or may not be in the same mobile network. The SMS facility is currently offered by almost all mobile devices (particularly those that use the GSM/UMTS system).

The SMS is a very popular form of communication and networks handle millions of SMS messages per month. The high usage of SMS results in a large volume of SMS traffic both within and between mobile networks.

SMS communication is handled differently from calls due to SMS being non-interactive and not time critical. All SMS messages are handled by Short Message Service Centres (SMS-SC or SMSC). Each network includes an SMSC which routes the SMS messages of its subscribers to the network of the target device. The SMSC receives the SMS message along with the Mobile Subscriber ISDN Number (MSISDN) of the device to which the SMS should be sent. In order to route the SMS message to the target device, the SMSC must identify the target subscriber and to where the SMS should be routed. This data is obtained by the SMSC signalling to an associated Short Message Service Gateway Mobile Switching Centre (SMS-GMSC) which, in turn, signals to the target device's Home Location Register (HLR) to determine to where the SMS message should be routed and the identity of the target subscriber. This process is known as a Routing Information Retrieval.

When receiving a Routing Information Retrieval, the HLR responds with a Network Node Number to which the SMS message should be transmitted, which could be the address of the current serving MSC, SGSN or both, as well as the International Mobile Subscriber Identity (IMSI - see 3GPP TS 23.003).

As an optional enhancement, the home network of the target device may have deployed an SMS Router (see 3GPP TS 23.840) which handles all incoming SMS messages for devices registered in a network. In this case, the Network node number passed to the SMS-GMSC by the HLR is the address of the SMS Router. The SMS Router then takes on delivery of the SMS message to the current serving MSC or SGSN. Unlike the MSC or SGSN which changes as a mobile device moves around, the SMS Router is predominantly always the same. However, general O&M and network upgrading mean the address can change, but this is infrequent, particularly compared to the change of current serving MSC/SGSN for a target device.

The SMS-GMSC then forwards the SMS message, along with the received IMSI, on to the returned address from the HLR (be that an MSC. SGSN or SMS Router), and in the successful case, the SMS message is delivered to the target device. The MSC and SGSN use the IMSI parameter to identify the target device.

Signals between the SMS-GMSC or MMSC and the various HLRs consume network capacity. They can also be expensive for network operators, particularly if such signalling must pass through transit networks or over large distances, This is a particular concern due to the large volume of SMS messages sent today.

US2005108417 Al discloses an arrangement for routing messages between devices in different networks. A cache stores the MSC/VLR address of potential recipient devices. A sending side device uses the MSC/VLR address in the cache to route the message to the recipient device. The MSC/VLR addresses of potential recipient devices are stored for a predetermined time period such as 20 minutes, and will become out of date when the recipient device moves to a different MSC/VLR.

We have appreciated that Routing Information Retrieval consumes a large volume of network capacity and can be expensive for network providers. We have also appreciated that the SMS Router associated with a particular network changes infrequently.

Embodiments of the invention address these problems by dynamically building a database of Network Node Numbers and IMSIs which are returned by the HLR during a Routing Information Retrieval. The Network Node Numbers and IMSIs are stored along with the associated MSISDN at the SMSC.

In embodiments of the invention, when the SMSC receives a SMS message for a particular MSISDN it interrogates its database of stored MSISDNs and Network Node Numbers to check for a match with the incoming MSISDN. If the SMSC holds a record of the network Node Number and IMSI for the incoming MSISDN, it forwards the SMS directly to the Network Node. Therefore, it does not need to signal to the HLR to obtain this data. If the SMSC holds no record for the MSISDN, it instructs a Routing Information Retrieval during which the HLR is interrogated to provide the Network Node Number and IMSI. This data is then stored at the SMSC. This provides a decrease in the volume of traffic between the SMSC and HLRs. Embodiments of the invention arc particularly beneficial when the Network node number corresponds to a SMS Router. Since the SMS Router for a MSISDN changes very infrequently, the Network Network Node Number can be used for an extended time period.

In preferred embodiments of the invention, when the SMSC receives confirmation of the Network node number and IMSI, a validity period is associated with the received data. In the case that the SMSC receives a message for a MSISDN for which the database holds a Network Node Number and IMSI but for which the validity period has expired, the SMSC signals to the HLR to retrieve current routing information. Such embodiments provide the advantage that an indication of reliability is provided to the data.

The invention is defined in its various aspects in the appended claims, to which reference should now be made, namely independent system claim 1 and independent method claim 13.

An embodiment of the invention is now described with reference to the accompanying figures, in which:
Figure 1 shows the network architecture used in SMS and the flow of signalling and information between the components.
Figure 2 shows the data stored in the memory of an SMSC.
Figure 3 is a flow diagram showing the signaling between an SMSC and an HLR and SMS router.
Figure 4 shows the network architecture and the flow of signaling and information between the components in MMS.

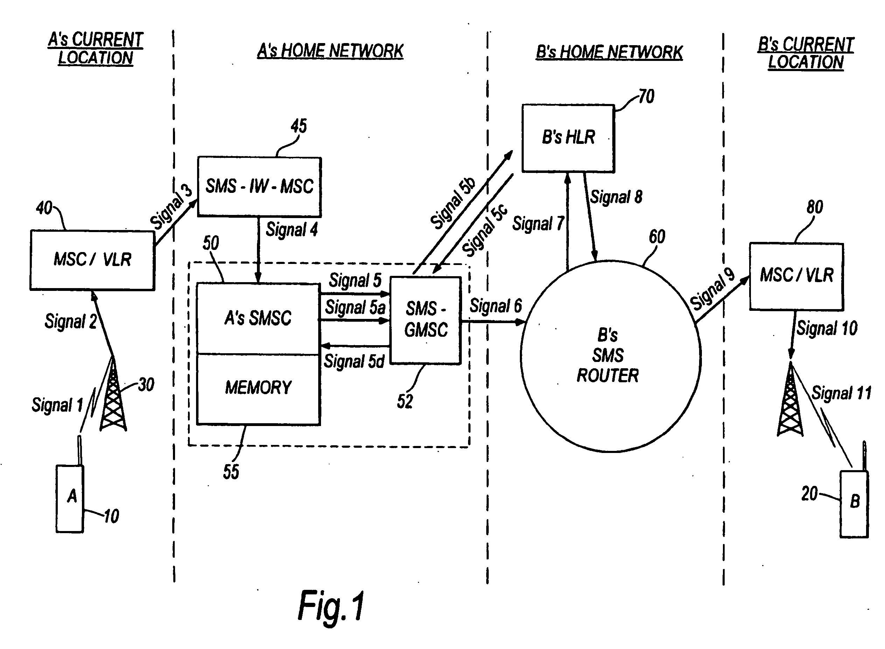

Figure 1 shows the network components and signalling between components when a first device A 10 transmits a short message service (SMS) message to a second device B 20. The SMS message may contain text or may contain data e.g. a ring-tone from a premium rate service.

In order to initiate the transmission of the SMS message, device A creates the message for transmission. If the message is text only, this will be created using the alphanumeric keys on the mobile device. If the message involves a file, for example a ringtone, this may be retrieved from the memory of device A. Once the message is created, device A selects the Mobile Subscriber ISDN Number (MSISDN) of the target device and transmits this in the SMS message to the network.

Typically, the MSISDN is recognized by a customer as their telephone number. It includes a country code (the country in which the mobile network resides), a national destination code (usually identifying the network to which the device is registered,) and a subscriber ID number. MSISDNs are allocated to each network in each country and the network allocates the MSISDN to a customer when he first signs a contract with the network. An example of an MSISDN is 44 7700 900123, where country code = 44, national destination code = 7700 and Subscriber IS number = 900123.

In certain cases, subscribers can transfer their MSISDNs between networks, this is known as 'porting'. For example, if a subscriber first registers with network A he will be provided with a MSISDN allocated to network A. Subsequently, if he cancels his contract with network A and signs with network B, he may be able to keep his MSISDN. Therefore, his MSISDN will appear to be associated with network A. When MSISDNs are transferred in this way, the network A will keep a record that the MSISDN has been ported to network B.

The International Mobile Subscriber Identity (IMSI) of device A is associated with the MSISDN and is stored in the Home location Register (HLR) of the subscriber network. The IMSI is a unique identification number for the SIM in the device. This differs from the MSISDN since the IMSI is uniquely associated with SIM and is non-transferable. The IMSI is generally not "seen" by the customer and is used by the network to identify the customer in the whole GSM/UMTS system. Additionally, it is used for such things as billing, O&M and statistical analysis. In contrast, the MSISDN is recognized by the customer and his contacts as his telephone number and can be ported between devices..

The IMSI is defined in 3GPP TS 23.003 to always be 15 digits long and made up of 3 parts: Mobile Country Code (MCC), Mobile Network Code (MNC) and Mobile Subscriber Identification Number (MSIN). The MCC identifies the country in which the home mobile network resides, for example UK = 234 and 235; the MNC identifies the mobile network within the country, for example Vodafone UK = 15; and the MSIN identifies the subscriber of the mobile network's customer base. A unique IMSI is allocated to each SIM card, and thus is impervious to any "number portability".

Referring to Figure 1, on transmission of the SMS from device A (signal 1), the SMS is received by the current serving base station (BTS) 30 of the device and is then forwarded on to the mobile switching centre (MSC) 40 responsible for the cell in which the device is located (signal 2). Both the serving cell 30 and the MSC 40 are located locally to device A.

The MSC 40 receives the SMS message containing the MSISDN of targer device B and the Short Message Service Centre (SMSC) address that is associated with subscriber of device A. On receipt of the transmission, the MSC identifies the subscriber of device A by its IMSI (which it is has stored locally in the VLR) and that the transmission contains an SMS message. The network handles SMS messages differently from other services e.g. speech calls or emergency calls. Since SMS is simply one way data, the network is not required to establish an active connection between the sender and recipient. Instead, the transmitting device pushes the message to the network.

SMS messages are handled by the identified SMSC and, once MSC 40 has identified that the transmission is an SMS, it forwards the transmission to the SMS Interworking MSC (SMS-IW-MSC) 45 (signal 3), which in turn, forwards it onto the SMSC 50 (signal 4). Typically, when the SMS is received by the SMSC. the SMSC returns an acknowledgement to the originating device that the message has been "sent".

SMSC 50 is located in the home network of device A. SMSC 50 handles all of device A's SMS messages regardless of where device A is located geographically.

On receipt of the SMS message, SMSC 50 must arrange for the SMS to be forwarded to target device B 20. Under the protocol defined in 3GPP TR 23.840, the ultimate responsibility of completing the transmission of the SMS message lies with an SMS routing node 60 which is located in the home network of device B and, typically, will be located in the home network of B.

In order for SMSC 50 to be able to forward the SMS message to B's SMS router 60, it must identify the address of device B's MSC/SGSN/SMS router 60, which will be provided as a network node number. This information can be obtained from B's Home Location Register (HLR) 70 by initiating a Routing Information Retrieval.

SMSC 50 includes a memory 55 which stores the IMSI and Network Node Number (which will be either an MSC, SGSN or SMS Router address for SMS messages) associated with MSISDNs. This data is compiled by the SMSC as it receives SMS messages for different MSISDN and the SMS-GMSC executes Routing information Retrievals for those MSISDNs. On receiving an SMS message. SMSC 50 interrogates its memory to check whether the IMSI and Network Node Number are stored for the incoming MSISDN. If the IMSI and Network Node Number are stored for that MSISDN then the SMSC retrieves the IMSI and Network Node Number from its memory 55 and forwards the SMS including the IMSI and Network Node Number to the SMS-GMSC 52 (signal 5). The SMS-GMSC 52 then forwards the SMS message and the IMSI directly to SMS router 60 (signal 6) using the Network Node Number of the SMS Router. If the IMSI and Network Node Number are not stored in the memory of the SMSC. the SMSC signals to its SMS-GMSC to perform a Routing Information Retrieval with the HLR to retrieve the IMSI and Network Node Number for device B (signal 5a). SMS-GMSC 52 then signals to device B's HLR 70 to identify to where the SMS message should be routed (signal 5b). B's HLR is identified from the country code and network code included in the MSIDN of device B. SMSC 50 already includes a database of HLR addresses for each MSISDN country code and network code.

On receipt of the Routing Information Retrieval signal from the SMS-GMSC 52, the HLR 70 interrogates its database to identify the IMSI and Network Node Number allocated to the MSISDN of device B 20. This data is then transmitted back to the SMS-GMSC 52 (signal 5c).

In the case when the target device has ported his MSISDN from a first network to a second network, the Routing Information Retrieval will be directed to the HLR associated with the first network since the MSISDN appears to be associated with that network. Since HLRs maintain databases of their MSISDNs which have been ported to different networks, it will identify the HLR of the second network to which the subscriber ported and will forward the Routing Information Retrieval request to the HLR of the second network. The HLR of the second network will report back to the HLR of the first network and the data will subsequently be transmitted back to the requesting SMS-GMSC.

On receiving the IMSI and Network Node Number for device B 20, SMS-GMSC 52 forwards this data to SMSC 50 (signal 5d) and SMSC 50 associates the data with the MSISDN of device B and stores the data in its memory area 55.

In preferred embodiments of the invention, the IMSI and Network Node Number are considered to be valid for a defined validity period which is stored along with the IMSI, Network Node Number and MSISDN. The validity period may be provided in relative terms, for example 30 days from the time on which the SMSC received the data, or in absolute terms, for example the data is valid until 10:30 10 February 2007. The validity period may be provided by the SMSC or by the HLR. The validity periods for the IMSI and Network Node Number may be different.

In the case that the SMSC receives a SMS message for a MSISDN for which the validity period of its IMSI and/or Network Node Number has expired, the SMSC will signal to the SMS-GMSC and instruct it to perform an information routing retrieval (signals 5a - 5c) in order to obtain up to date data. The new data will then replace the data for which the validity period has expired.

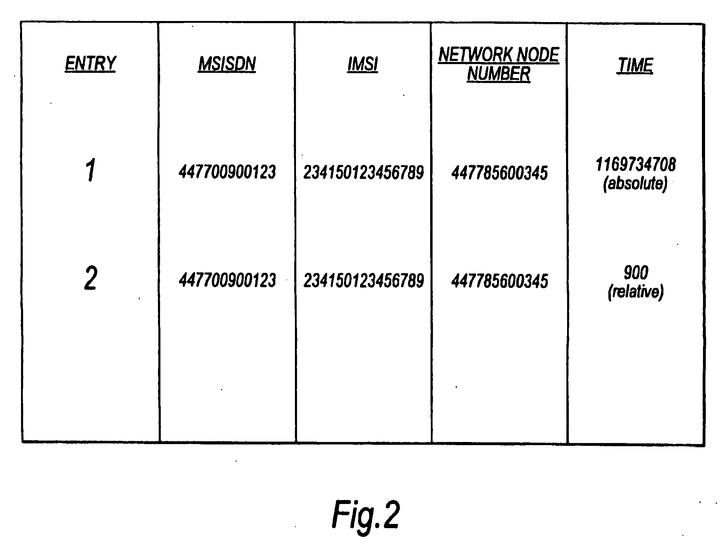

Figure 2 shows two examples of how the data could be stored in the SMSC memory. The MSISDN received by the SMSC is 447700900123 (where CC=44, NDC=7700 and SN=900123); the IMSI associated with the MSISDN is 234150123456789 (where MCC = 234, MNC = 15 and MSIN = 0123456789) and the Network Node Number relating to the target device's MSC, SGSN or SMS Router is 447785600345. The validity period can be given as an absolute time (entry 1) or relative time (entry 2). Absolute times are typically given in seconds since 1 January 1970. Therefore, in entry 1 the data is valid until 25 January 2007. Relative times are given in seconds from a triggering event, for example time of receipt or time of storage. Therefore, in entry 2, the data are valid for 15 minutes (i.e. 15 x 60 = 900) from the time of the triggering event.

Once SMS-GMSC 52 has obtained a valid IMSI and Network Node Number, it forwards the IMSI and the SMS to the Network Node Number, which will represent SMS router 60 (signal 6). SMS router 60 is located in the home network of device B.

On receiving the IMSI and SMS, the SMS router 60 must identify the current location of device B in order that the SMS can be forwarded to the correct cell. In order to identify the current location of device B, SMS router 60 transmits a location request to HLR 70 associated with device B (signal 7). SMS router 60 is able to identify the address of the HLR from either the MSISDN or the IMSI of device B.

As mentioned above, the HLR of a network stores the details of the location of all of its subscribers. Typically the location is defined in terms of the visitor register (VLR) and mobile switching centre (MSC) which cover the location area and cell in which the subscriber is currently located. This data is updated each time the mobile device moves from a cell covered by a first VLR/MSC into a cell covered by a second VLR/MSC.

HLR 70 transmits the address of the VLR/MSC currently associated with device B 20 to SMS router 60 (signal 8). On receipt of this data, SMS router 60 forwards the SMS and IMSI of device B to the VLR/MSC 80 which covers the cell in which device B 20 is currently located (signal 9).

The VLR/MSC then transmits the SMS to device B (signals 10 and 11).

In the situation that the SMSC has stored data which appears to be within the validity period but which has changed since the data was stored, the SMS will be transmitted to an incorrect MSC, SGSN or SMS Router. In this case, the MSC, SGSN or SMS Router will return a predefined error message to the SMSC. The SMS-GMSC will then perform signalling with the HLR in order to identify the Network Node Number for the current SMS router. The current IMSI and Network Node Number will then be received by the HLR and will be updated in the SMSC's database

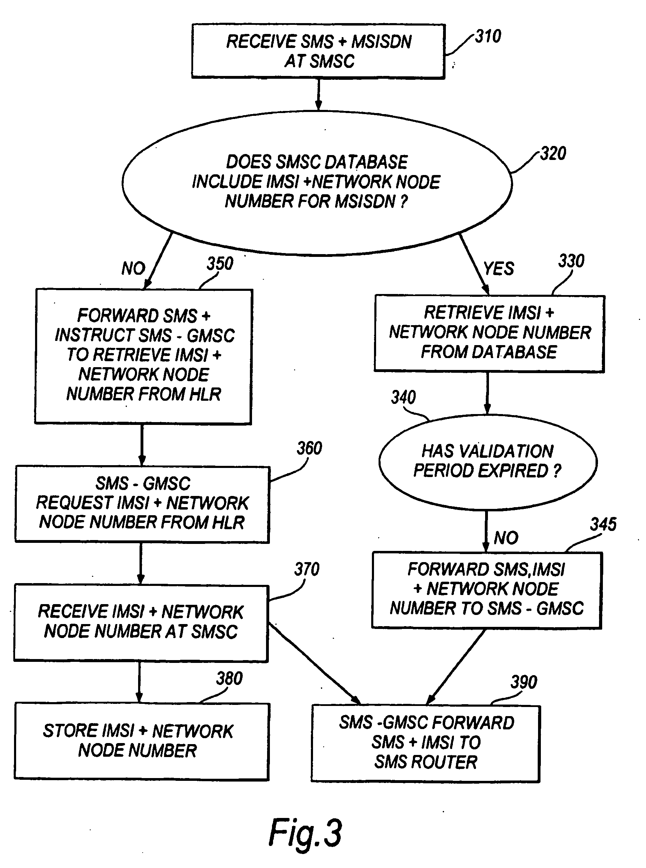

Figure 3 is a flow diagram showing the signals taken between the SMSC 50, SMS-GMSC 52, HLR 70 and MSC/SGSN/SMS Router 60 of Figure 1. At 3 10 the SMSC receives, from one of its registered devices, a SMS message and a MSISDN to which the SMS message is to be transmitted. At 320 the SMSC searches its database to determine whether it has an IMSI and Network Node Number associated with the MSISDN. If the IMSI and Network Node Number are stored, they are retrieved from the memory of the SMSC at 330. At 340 the SMSC determines whether the data is within its validity period. If the data is within the validity period the SMSC forwards the IMSI, SMS message and Network Node Number to the SMS-GMSC at 345.

If the SMSC memory does not include the IMSI and Network Node Number associated with MSISDN at 320, or if the data is outside its validity period at 340, SMSC 50 signals to the SMS-GMSC 52 to initiate a Routing Information Retrieval to obtain the IMSI and Network Node Number associated with the MSISDN 350. At 360 the SMS-GMSC signals to the HLR and at 370 SMS-GMSC receives the IMSI and Network Node Number from HLR. At 380, the data is stored in the memory of SMSC along with confirmation of the validity period.

When the SMS-GMSC has received the IMSI and Network Node Number from the HLR at 370, or if the retrieved IMSI and Network Node Number is within the designated validity period at 340, the SMS and IMSI are forwarded to the SMS router at 390.

By storing the IMSI and Network Node number associated with an MSISDN, embodiments of the invention are able to reduce the signalling between the SMSC and Home Location Registers of mobile devices. Since the address of a deployed SMS Router associated with the MSISDN (contained in the Network Node Number) will change very infrequently, the SMSC is able to use previously obtained IMSI and Network Node Number to forward future messages which it receives for that MSISDN. This results in the SMSC not having to signal to an HLR every time it receives an SMS. This provides a considerable saving in network resource and expense.

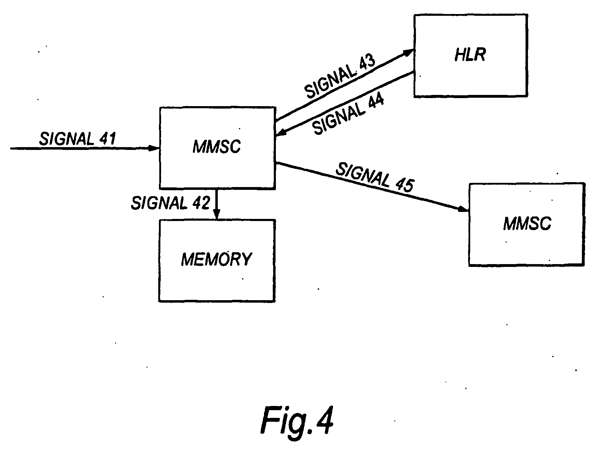

Further embodiments of the invention are employed in the delivery of Multimedia Messaging Service (MMS) messages in which SMS signalling is also used. An example of such an embodiment is shown in figure 4. Typically, MMS messages are transmitted to the target NINISC using the Simple Mail Transfer Protocol (SMTP) over IP. The IP address is associated with a DNS domain name which is built from the IMSI of the subscriber. Such embodiments take advantage of the fact that IMSIs of subscribers rarely change and store this data along with the MSISDN.

In Figure 4, a Multimedia Messaging Service Centre (MMSC) 410 receives an MMS message from a device (signal 41) and takes on responsibility for delivering message to the identified target device. The MMSC has a memory 415 which stores a database of MSISDNs of devices with their associated IMSIs. The database is built dynamically as IMSI data is retrieved from HLRs. On receiving the MMS message and MSISDN of the target device, the MMSC interrogates its database to identify whether it has an IMSI for the MSISDN (signal 42). If its database does not include the associated data, the MMSC performs a Routing Information Retrieval in exactly the same way as an SMS-GMSC. The MMSC signals to the HLR 430 of the target device to request the IMSI of the MSISDN (signal 43).

Upon receiving the response (signal 44), the MMSC typically ignores the returned Network Node Number (MSC. SGSN or SMS Router) and analyses only the IMSI. The MMSC extracts the Mobile Country Code (MCC) and Mobile Network Code (MNC) portions of the IMSI and uses these to build a default DNS domain name (usually of the form: mmsc.XXXmnc.YYYmcc.gprs, where XXX is the MNC, padded with a zero to the left where appropriate, and YYY is the MCC). The MMSC then performs a DNS look-up on this domain name in order to retrieve the IP address of the target device's MMSC (which always resides in the target device's home network). If successful, the IP address, IMSI and MSISDN are stored in the MMSC memory 415. Embodiments of the invention store either or ail of the IMSI, domain name and the IP address with the MSISDN. In preferred embodiments of the invention, the data is decided with a validity period in the same way as the IMSI and Network Node Data discussed above with reference to figures 1 to 3.

The MMSC then forwards the MMS message to the target device's MMSC 440 using the Simple Mail Transfer Protocol (SMTP) over IP (signal 45). Since SMTP over IP is used, the current serving MSC or SGSN or the SMS Router will never receive anything.

In the case that the memory of the MMSC includes domain name or IMSI data associated with the target MSISDN, the MMSC forwards the MMS directly to the MMS router, without performing a Routing Information Retrieval from the target device's HLR.

Typically, the IMSI of a target subscriber changes very infrequently. In fact, it will only change when a new Subscriber Identity Module (SIM) card is issued, and even then, It would only affect the MMSC if this new SIM card was from a different mobile network (as happens when a subscriber "ports" his/her MSISDN to a new mobile network) because otherwise the MCC and MNC would likely remain the same. Therefore, embodiments of the invention can significantly reduce the volume of signalling between MMSCs and HLRs.

## Claims

1. A mobile communications system including:
a plurality of mobile communications networks, each of which includes a plurality of cells, each cell being served by a node (80), and a plurality of receiving subscriber devices (20) configured to receive messages via one of the nodes (80) when in the cell served by the node (80);
a message distribution centre for routing the messages from sending subscriber devices (10) to the receiving subscriber devices (20) across the communication networks, comprising:
means (50) for receiving each message from the sending subscriber devices (10), the messages including a subscriber identity, ID, for the receiving subscriber device (20),
a database (55) configured to store distribution addresses corresponding to subscriber Identities, IDs;
means for interrogating the database (55) on receiving each of the messages to determine whether the database (55) includes the distribution address associated with the ID of the receiving subscriber device (20);
means for retrieving the distribution address for the receiving subscriber device (20) from a register (70) associated with the receiving subscriber device (20) if the distribution address is not stored in the database (55);
means for storing retrieved distribution address for the receiving subscriber device (20) and associated subscriber ID in the database (55); and
means for forwarding the message and the subscriber ID to the distribution address of the receiving subscriber device (20);
wherein each of the communication networks includes a message router (60) configured to receive all incoming messages for the receiving subscriber devices (20) of the communication network and to forward each of the messages to the node (80) serving the cell of each of the receiving subscriber devices (20), and in that the distribution address is the address of the message router (60).

2. A mobile communication system according to claim 1 wherein the message distribution center further comprises a means for applying a validity time period to the distribution address wherein if a message is received for the subscriber ID for the receiving subscriber device . (20), for which the validity period of the stored distribution address has expired, the message distribution centre retrieves the current distribution address for the subscriber ID from the register associated with the receiving subscriber device (20).

3. A mobile communications system according to claim 2 wherein the validity period is an absolute time period.

4. A mobile communications system according to claim 2 wherein the validity period is a relative time period.

5. A mobile communications system according to claim 1, 2, 3 or 4 wherein, the message is a Short Message Service message.

6. A mobile communications system according to claim 5 wherein the message distribution centre is a Short Message Service Centre.

7. A mobile communications system according to claim 1, 2, 3, 4, 5 or 6 wherein the subscriber ID is a Mobile Subscriber ISDN Number, MSISDN.

8. A mobile communications system according to any of claims 1 to 7 wherein the distribution address of the message router (60) corresponds to a distribution address of a Short Message Service, SMS, Router.

9. A mobile communications system according to any of claims 1 to 8 wherein the register is a Home Location Register for the second subscriber.

10. A mobile communications system according to any of claims 1 to 9 wherein the means for forwarding the message is a Short Message Service Gateway MOBILE SWITCHING Centre, SMS-GMSC.

11. A mobile communications system according to any of claims 1 to 10 wherein the means for retrieving the distribution address for the second subscriber also retrieves the International Mobile Subscriber Identity, IMSI, of the second subscriber from the register and this is stored in the database and forwarded to the distribution address of the second subscriber.

12. A mobile communications system according to any preceding claim wherein the distribution address is a network node number.

13. A method for routing a message from a first subscriber to a second subscriber across a communication system, which communication system includes a plurality of mobile communications networks, each of which includes a plurality of cells, each cell being served by a node (80), and a plurality of receiving subscriber devices (20) configured to receive messages via one of the nodes (80) when in the cell served by the node (80), the method comprising the steps of:
receiving a message for one of said receiving subscriber devices (20) from a sending subscriber device (10) at a message distribution centre, the message including a subscriber identity ID, for the receiving subscriber device (20), the message distribution centre comprising a database (55) which stores distribution addresses corresponding to subscriber identities, IDs;
interrogating the database (55) to determine whether the database (55) includes the distribution address associated with the ID of the receiving subscriber device (20);
if the distribution address is not stored in the database (55), retrieving the distribution address for the receiving subscriber device (20) from a register (70) associated with the receiving subscriber device (20) and storing the retrieved distribution address for the receiving subscriber device (20) and associated subscriber ID in the database (55); and
forwarding the message and the subscriber ID to the distribution address of the receiving subscriber device (20);
wherein each of the communication networks includes a message router (60) which receives all incoming messages for the receiving subscriber devices (20) of the communication network and which forwards each of the messages to the node (80) serving the cell of each of the receiving subscriber devices (20), and the distribution address is the address of the message router (60).

14. A method according to claim 13 further comprising the step of applying a validity time period to the distribution address wherein if a message is received for the subscriber ID for the receiving subscriber device (20) for which the validity period of the stored distribution address has expired, the message distribution centre retrieves the current distribution address for the subscriber ID from the register associated with the receiving subscriber device (20).

15. A method according to claim 14 wherein the validity period is an absolute time period.

16. A method according to claim 14 wherein the validity period is a relative time period.

17. A method according to claim 13, 14, 15 or 16 wherein the message is a Short Message Service message.

18. A method according to claim 17 wherein the message distribution centre is a Short Message Service Centre.

19. A method according to claim 13, 14, 15, 16, 17 or 18 wherein the subscriber ID is a Mobile Subscribe ISDN Number.

20. A method according to any of claims 13 to 19 wherein the distribution address of the message router corresponds to a distribution address of a SMS Router.

21. A method according to any of claims 13 to 20 wherein the register is a Home Location Register for the second subscriber.

22. A method according to any of claims 13 to 21 wherein the step of forwarding the message is performed by a SMS-GMSC.

23. A method according to any of claims 13 to 22 comprising the further steps of retrieving the IMSI of the second subscriber from the register when retrieving the distribution address for the second subscriber, storing the IMSI in the database and forwarding the IMSI to the distribution address of the second subscriber.

24. A method according to any of claims 13 to 23 wherein the distribution address is a network node number.

## Patentansprüche

1. Mobiles Kommunikationssystem, das Folgendes umfasst:
mehrere mobile Kommunikationsnetze, von denen jedes mehrere Zellen beinhaltet, wobei jede Zelle von einem Knoten (80) bedient wird, und mehrere empfangende Teilnehmergeräte (20), die zum Empfangen von Nachrichten über einen der Knoten (80) konfiguriert sind, wenn es sich in der von dem Knoten (80) bedienten Zelle befindet;
eine Nachrichtenverteilungszentrale zum Leiten der Nachrichten von sendenden Teilnehmergeräten (10) zu den empfangenden Teilnehmergeräten (20) über die Kommunikationsnetze, die Folgendes umfasst:
Mittel (50) zum Empfangen jeder Nachricht von den sendenden Teilnehmergeräten (10), wobei die Nachrichten eine Teilnehmeridentität (ID) für das empfangende Teilnehmergerät (20) beinhalten,
eine Datenbank (55), die zum Speichern von Verteilungsadressen konfiguriert ist, die Teilnehmeridentitäten (IDs) entsprechen;
Mittel zum Abfragen der Datenbank (55) nach dem Empfang jeder der Nachrichten, um zu ermitteln, ob die Datenbank (55) die mit der ID des empfangenden Teilnehmergeräts (20) assoziierte Verteilungsadresse enthält;
Mittel zum Abrufen der Verteilungsadresse für das empfangende Teilnehmergerät (20) aus einem Register (70), das mit dem empfangenden Teilnehmergerät (20) assoziiert ist, wenn die Verteilungsadresse nicht in der Datenbank (55) gespeichert ist;
Mittel zum Speichern abgerufener Verteilungsadressen für das empfangende Teilnehmergerät (20) und die assoziierte Teilnehmer-ID in der Datenbank (55); und
Mittel zum Weiterleiten der Nachricht und der Teilnehmer-ID zu der Verteilungsadresse des empfangenden Teilnehmergerätes (20);
wobei jedes der Kommunikationsnetze einen Nachrichtenrouter (60) beinhaltet, der so konfiguriert ist, dass er alle eingehenden Nachrichten für die empfangenden Teilnehmergeräte (20) des Kommunikationsnetzes empfängt und jede der Nachrichten zu dem Knoten (80) weiterleitet, der die Zelle jedes der empfangenden Teilnehmergeräte (20) bedient, und wobei die Verteilungsadresse die Adresse des Nachrichtenrouters (60) ist.

2. Mobiles Kommunikationssystem nach Anspruch 1, wobei die Nachrichtenverteilungszentrale ferner ein Mittel zum Anwenden einer Gültigkeitszeitperiode auf die Verteilungsadresse umfasst, wobei dann, wenn eine Nachricht für die Teilnehmer-ID für das empfangende Teilnehmergerät (20) empfangen wird, für das die Gültigkeitsperiode der gespeicherten Verteilungsadresse abgelaufen ist, die Nachrichtenverteilungszentrale die aktuelle Verteilungsadresse für die Teilnehmer-ID aus dem mit dem empfangenden Teilnehmergerät (20) assoziierten Register abruft.

3. Mobiles Kommunikationssystem nach Anspruch 2, wobei die Gültigkeitsperiode eine absolute Zeitperiode ist.

4. Mobiles Kommunikationssystem nach Anspruch 2, wobei die Gültigkeitsperiode eine relative Zeitperiode ist.

5. Mobiles Kommunikationssystem nach Anspruch 1, 2, 3 oder 4, wobei die Nachricht eine SMS-(Short Message Service)-Nachricht ist.

6. Mobiles Kommunikationssystem nach Anspruch 5, wobei die Nachrichtenverteilungszentrale eine SMS-(Short Message Service)-Zentrale ist.

7. Mobiles Kommunikationssystem nach Anspruch 1, 2, 3, 4, 5 oder 6, wobei die Teilnehmer-ID eine Mobilteilnehmer-ISDN-(MSISDN)-Nummer ist.

8. Mobiles Kommunikationssystem nach einem der Ansprüche 1 bis 7, wobei die Verteilungsadresse des Nachrichtenrouters (60) einer Verteilungsadresse eines SMS-(Short Message Service)-Routers entspricht.

9. Mobiles Kommunikationssystem nach einem der Ansprüche 1 bis 8, wobei das Register ein Home Location Register (HLR) für den zweiten Teilnehmer ist.

10. Mobiles Kommunikationssystem nach einem der Ansprüche 1 bis 9, wobei das Mittel zum Weiterleiten der Nachricht eine SMS-GMSC (Short Message Service Gateway Mobile Switching Centre) ist.

11. Mobiles Kommunikationssystem nach einem der Ansprüche 1 bis 10, wobei das Mittel zum Abrufen der Verteilungsadresse für den zweiten Teilnehmer auch die IMSI (International Mobile Subscriber Identity) des zweiten Teilnehmers aus dem Register abruft, die in der Datenbank speichert und zur Verteilungsadresse des zweiten Teilnehmers weitergeleitet wird.

12. Mobiles Kommunikationssystem nach einem der vorherigen Ansprüche, wobei die Verteilungsadresse eine Netzwerkknotennummer ist.

13. Verfahren zum Leiten einer Nachricht von einem ersten Teilnehmer zu einem zweiten Teilnehmer über ein Kommunikationssystem, wobei das Kommunikationssystem mehrere mobile Kommunikationsnetzwerke, die jeweils mehrere Zellen beinhalten, wobei jede Zelle von einem Knoten (80) bedient wird, und mehrere empfangende Teilnehmergeräte (20) beinhaltet, die zum Empfangen von Nachrichten über einen der Knoten (80) konfiguriert sind, wenn sie sich in der von dem Knoten (80) bedienten Zelle befinden, wobei das Verfahren die folgenden Schritte beinhaltet:
Empfangen einer Nachricht für eines der genannten empfangenden Teilnehmergeräte (20) von einem sendenden Teilnehmergerät (10) an einer Nachrichtenverteilungszentrale, wobei die Nachricht eine Teilnehmeridentität (ID) für das empfangende Teilnehmergerät (20) beinhaltet, wobei die Nachrichtenverteilungszentrale eine Datenbank (55) umfasst, die Teilnehmeridentitäten (IDs) entsprechende Verteilungsadressen speichert;
Abfragen der Datenbank (55), um zu ermitteln, ob die Datenbank (55) die mit der ID des empfangenden Teilnehmergeräts (20) assoziierte Verteilungsadresse enthält;
wenn die Verteilungsadresse nicht in der Datenbank (55) gespeichert ist, Abrufen der Verteilungsadresse für das empfangende Teilnehmergerät (20) aus einem mit dem empfangenden Teilnehmergerät (20) assoziierten Register (70) und Speichern der abgerufenen Verteilungsadresse für das empfangende Teilnehmergerät (20) und die assoziierte Teilnehmer-ID in der Datenbank (55); und
Weiterleiten der Nachricht und der Teilnehmer-ID zu der Verteilungsadresse des empfangenden Teilnehmergerätes (20);
wobei jedes der Kommunikationsnetze einen Nachrichtenrouter (60) beinhaltet, der alle eingehenden Nachrichten für die empfangenden Teilnehmergeräte (20) des Kommunikationsnetzes empfängt und jede der Nachrichten zu dem Knoten (80) weiterleitet, der die Zelle jedes der empfangenden Teilnehmergeräte (20) bedient, und wobei die Verteilungsadresse die Adresse des Nachrichtenrouters (60) ist.

14. Verfahren nach Anspruch 13, das ferner den Schritt des Anwendens einer Gültigkeitszeitperiode auf die Verteilungsadresse beinhaltet, wobei, wenn eine Nachricht für die Teilnehmer-ID für das empfangende Teilnehmergerät (20) empfangen wird, für das die Gültigkeitsperiode der gespeicherten Verteilungsadresse abgelaufen ist, die Nachrichtenverteilungszentrale die aktuelle Verteilungsadresse für die Teilnehmer-ID aus dem mit dem empfangenden Teilnehmergerät (20) assoziierten Register abruft.

15. Verfahren nach Anspruch 14, wobei die Gültigkeitsperiode eine absolute Zeitperiode ist.

16. Verfahren nach Anspruch 14, wobei die Gültigkeitsperiode eine relative Zeitperiode ist.

17. Verfahren nach Anspruch 13, 14, 15 oder 16, wobei die Nachricht eine SMS-(Short Message Service)-Nachricht ist.

18. Verfahren nach Anspruch 17, wobei die Nachrichtenverteilungszentrale eine SMS-(Short Message Service)-Zentrale ist.

19. Verfahren nach Anspruch 13, 14, 15, 16, 17 oder 18, wobei die Teilnehmer-ID eine Mobilteilnehmer-ISDN-(MSISDN)-Nummer ist.

20. Verfahren nach einem der Ansprüche 13 bis 19, wobei die Verteilungsadresse des Nachrichtenrouters einer Verteilungsadresse eines SMS-Routers entspricht.

21. Verfahren nach einem der Ansprüche 13 bis 20, wobei das Register ein Home Location Register (HLR) für den zweiten Teilnehmer ist.

22. Verfahren nach einem der Ansprüche 13 bis 21, wobei der Schritt des Weiterleitens der Nachricht durch eine SMS-GMSC durchgeführt wird.

23. Verfahren nach einem der Ansprüche 13 bis 22, das ferner die weiteren Schritte des Abrufens der IMSI des zweiten Teilnehmers aus dem Register beim Abrufen der Verteilungsadresse für den zweiten Teilnehmer, des Speicherns der IMSI in der Datenbank und des Weiterleitens der IMSI zur Verteilungsadresse des zweiten Teilnehmers beinhaltet.

24. Verfahren nach einem der Ansprüche 13 bis 23, wobei die Verteilungsadresse eine Netzwerkknotennummer ist.

## Revendications

1. Système de communications mobiles comprenant :
une pluralité de réseaux de communications mobiles, chacun d'entre eux englobant une pluralité de cellules, chaque cellule étant desservie par un noeud (80), et une pluralité de dispositifs récepteurs d'abonné (20) configurés pour recevoir des messages par l'intermédiaire de l'un des noeuds (80) quand ils se trouvent dans la cellule desservie par le noeud (80) ;
un centre de distribution de messages pour assurer le routage des messages à partir des dispositifs expéditeurs d'abonné (10) vers les dispositifs récepteurs d'abonné (20) par le biais des réseaux de communications, comprenant :
des moyens (50) pour recevoir chaque message en provenance des dispositifs expéditeurs d'abonné (10), les messages renfermant une identité d'abonné, (ID) pour le dispositif récepteur d'abonné (20),
une base de données (55) configurée pour stocker les adresses de distribution qui correspondent aux identités d'abonné (IDs) ;
des moyens pour interroger la base de données (55) lors de la réception de chacun des messages pour déterminer si la base de données (55) contient ou non l'adresse de distribution associée à l'ID du dispositif récepteur d'abonné (20) ;
des moyens pour récupérer l'adresse de distribution pour le dispositif récepteur d'abonné (20) à partir d'un registre (70) associé au dispositif récepteur d'abonné (20), dans les cas où l'adresse de distribution n'est pas stockée dans la base de données (55) ;
des moyens pour stocker l'adresse de distribution récupérée pour le dispositif récepteur d'abonné (20) et l'ID d'abonné associée dans la base de données (55) ; et
des moyens pour réacheminer le message et l'ID d'abonné vers l'adresse de distribution du dispositif récepteur d'abonné (20) ;
chacun des réseaux de communications comportant un routeur de messages (60) qui est configuré pour recevoir tous les messages entrants destinés aux dispositifs récepteurs d'abonné (20) du réseau de communications et pour réacheminer chaque message vers le noeud (80) desservant la cellule de chacun des dispositifs récepteurs d'abonné (20), et l'adresse de distribution étant l'adresse du routeur de messages (60).

2. Système de communications mobiles selon la revendication 1, le centre de distribution de messages comprenant en outre des moyens pour appliquer à l'adresse de distribution un intervalle de temps de validité, cas dans lequel si un message est reçu pour l'ID d'abonné pour le dispositif récepteur d'abonné (20), sur lequel la période de validité de l'adresse de distribution stockée a expiré, le centre de distribution de messages va récupérer l'adresse de distribution actuelle pour l'ID d'abonné à partir du registre associé au dispositif récepteur d'abonné (20).

3. Système de communications mobiles selon la revendication 2, la période de validité étant un intervalle de temps absolu.

4. Système de communications mobiles selon la revendication 2, la période de validité étant un intervalle de temps relatif.

5. Système de communications mobiles selon la revendication 1, 2, 3 ou 4, le message étant un message SMS (Short Message Service).

6. Système de communications mobiles selon la revendication 5, le centre de distribution de messages étant un centre SMS (Short Message Service).

7. Système de communications mobiles selon la revendication 1, 2, 3, 4, 5 ou 6, l'ID d'abonné étant un numéro ISDN d'abonné mobile (MSISDN).

8. Système de communications mobiles selon l'une quelconque des revendications 1 à 7, l'adresse de distribution du routeur de messages (60) correspondant à une adresse de distribution d'un routeur SMS (Short Message Service).

9. Système de communications mobiles selon l'une quelconque des revendications 1 à 8, le registre étant un registre des positions de rattachement (Home Location Register) pour le second abonné.

10. Système de communications mobiles selon l'une quelconque des revendications 1 à 9, les moyens servant au réacheminement du message étant un centre de commutation mobile passerelle de SMS (SMS-GMSC).

11. Système de communications mobiles selon l'une quelconque des revendications 1 à 10, les moyens servant à récupérer l'adresse de distribution pour le second abonné assurant également la récupération de l'IMSI (numéro d'identifiant international d'abonné au réseau) du second abonné à partir du registre, et ces informations étant stockées dans la base de données et réacheminées à l'adresse de distribution du second abonné.

12. Système de communications mobiles selon l'une quelconque des revendications précédentes, l'adresse de distribution étant un numéro de noeud de réseau.

13. Procédé destiné à assurer le routage d'un message à partir d'un premier abonné vers un second abonné, par le biais d'un système de communications, ce système de communications comprenant une pluralité de réseaux de communications mobiles, chacun d'entre eux englobant une pluralité de cellules, chaque cellule étant desservie par un noeud (80), et une pluralité de dispositifs récepteurs d'abonné (20) configurés pour recevoir des messages par l'intermédiaire de l'un des noeuds (80) quand ils se trouvent dans la cellule desservie par le noeud (80), le procédé comportant les étapes consistant à :
recevoir, au niveau d'un centre de distribution de messages, un message destiné à l'un desdits dispositifs récepteurs d'abonné (20) en provenance d'un dispositif expéditeur d'abonné (10), le message renfermant une identité d'abonné, (ID) pour le dispositif récepteur d'abonné (20), le centre de distribution de messages englobant une base de données (55) qui stocke les adresses de distribution correspondant aux identités d'abonné, (IDs);
interroger la base de données (55) pour déterminer si la base de données (55) contient ou non l'adresse de distribution associée à l'ID du dispositif récepteur d'abonné (20) ;
si l'adresse de distribution n'est pas stockée dans la base de données (55), récupérer l'adresse de distribution pour le dispositif récepteur d'abonné (20) à partir d'un registre (70) associé au dispositif récepteur d'abonné (20), et stocker dans la base de données (55) l'adresse de distribution récupérée pour le dispositif récepteur d'abonné (20) et l'ID d'abonné associée ; et
réacheminer le message et l'ID d'abonné vers l'adresse de distribution du dispositif récepteur d'abonné (20) ;
chacun des réseaux de communications comportant un routeur de messages (60) qui reçoit tous les messages entrants destinés aux dispositifs récepteurs d'abonné (20) du réseau de communications et qui réachemine chaque message vers le noeud (80) desservant la cellule de chacun des dispositifs récepteurs d'abonné (20), et l'adresse de distribution étant l'adresse du routeur de messages (60).

14. Procédé selon la revendication 13, comprenant en outre l'étape consistant à appliquer à l'adresse de distribution un intervalle de temps de validité, cas dans lequel si un message est reçu pour l'ID d'abonné pour le dispositif récepteur d'abonné (20), sur lequel la période de validité de l'adresse de distribution stockée a expiré, le centre de distribution de messages va récupérer l'adresse de distribution actuelle pour l'ID d'abonné à partir du registre associé au dispositif récepteur d'abonné (20).

15. Procédé selon la revendication 14, la période de validité étant un intervalle de temps absolu.

16. Procédé selon la revendication 14, la période de validité étant un intervalle de temps relatif.

17. Procédé selon la revendication 13, 14, 15 ou 16, le message étant un message SMS (Short Message Service).

18. Procédé selon la revendication 17, le centre de distribution de messages étant un centre SMS (Short Message Service).

19. Procédé selon la revendication 13, 14, 15, 16, 17 ou 18, l'ID d'abonné étant un numéro ISDN d'abonné mobile (MSISDN).

20. Procédé selon l'une quelconque des revendications 13 à 19, l'adresse de distribution du routeur de messages correspondant à une adresse de distribution d'un routeur SMS.

21. Procédé selon l'une quelconque des revendications 13 à 20, le registre étant un registre des positions de rattachement (Home Location Register) pour le second abonné.

22. Procédé selon l'une quelconque des revendications 13 à 21, l'étape de réacheminement du message étant effectuée par un SMS-GMSC.

23. Procédé selon l'une quelconque des revendications 13 à 22 comprenant les étapes supplémentaires consistant à récupérer l'IMSI du second abonné à partir du registre au moment de la récupération de l'adresse de distribution pour le second abonné, à stocker l'IMSI dans la base de données et à réacheminer l'IMSI vers l'adresse de distribution du second abonné.

24. Procédé selon l'une quelconque des revendications 13 à 23, l'adresse de distribution étant un numéro de noeud de réseau.
